# EUROPÄISCHE PATENTSCHRIFT

(11) **EP 3 026 262 B1**
(45) Veröffentlichungstag und Bekanntmachung des Hinweises auf die Patenterteilung: **04.07.2018**
(21) Anmeldenummer: 14182832.7
(22) Anmeldetag: 29.08.2014
(51) Int. Cl.: F03D 1/06, F03D 80/70, F03D 15/00, F03D 80/80, F03D 9/25

(54) **Windkraftanlage mit einem Antriebsstrang**
Wind power plant with a drive train
Éolienne doté d'une chaîne cinématique

(43) Veröffentlichungstag der Anmeldung: 01.06.2016
(73) Patentinhaber: Siemens Aktiengesellschaft, 80333 München (DE)
(72) Erfinder: Deicke, Matthias, 31311 Uetze / Schwüblingsen (DE)

(56) Entgegenhaltungen:
- WO-A1-2012/073505
- WO-A2-2009/147147
- WO-A2-2011/117005
- CN-Y- 201 367 991
- DE-A1-102007 012 408
- DE-A1-102009 048 766
- US-A- 4 669 263
- US-A1- 2008 236 952
- US-A1- 2010 019 505
- US-A1- 2011 286 844

## Beschreibung

Die vorliegende Erfindung betrifft eine Windkraftanlage umfassend einen Antriebsstrang mit einem ein Getriebegehäuse aufweisenden Getriebe, einem ein Generatorgehäuse aufweisenden Generator und einem Schmierölsystem, das ein Ölreservoir aufweist und zumindest zur Schmierung von innerhalb des Getriebegehäuses angeordneten Zahneingriffsbereichen und/oder Lagern ausgelegt ist. Ferner betrifft die vorliegende Erfindung eine Windkraftanlage mit einem solchen Antriebsstrang.

Windkraftanlagen der eingangs genannten Art sind im Stand der Technik in unterschiedlichsten Ausgestaltungen bekannt. Sie umfassen als Hauptbestandteile normalerweise einen Turm, eine drehbar am oberen Ende des Turms befestigte Trägerplattform und einen auf der Trägerplattform angeordneten Antriebsstrang. Der Antriebsstrang umfasst einen vom Wind angetriebenen Rotor, der an einer an einem Lagerbock gelagerten Rotorwelle befestigt ist. Die Rotorwelle ist über mindestens ein Verbindungselement mit einer Getriebeeingangswelle eines Getriebes verbunden. Die Ausgangswelle des Getriebes ist wiederum mit einem Generator verbunden, genauer gesagt mit einem in einem Generatorgehäuse angeordneten Generatorläufer. Der Generator ist an einen Frequenzumrichter angeschlossen, der zur Steuerung des Generators und zur Einspeisung der vom Generator erzeugten Energie in ein Stromnetz ausgelegt ist.

Während des Betriebs einer Windkraftanlage wird der Windströmung durch den Rotor Energie entnommen, wodurch der Rotor drehend angetrieben wird. Die Drehbewegung des Rotors wird über die Rotorwelle an das Getriebe übertragen, das zur Erhöhung der Drehzahl dient. Die Erhöhung der Drehzahl ist dahingehend von Vorteil, dass der Generator mit zunehmender Drehzahl kleiner ausgelegt werden kann, was sowohl in Bezug auf die Stabilität als auch auf die Kosten der Windkraftanlage von Vorteil ist. Das Getriebe wird meist mehrstufig ausgelegt, wobei bei größeren Anlagen zumindest für die langsam drehenden Getriebestufen zumindest der langsam drehenden Stufen in erster Linie Planetengetriebe zum Einsatz kommen. Die Ausgangswelle des Getriebes treibt wiederum den Generator an, der die mechanische Energie in elektrische Energie umwandelt, die dann über den Frequenzumrichter in ein Stromnetz eingespeist wird.

Zur Schmierung von innerhalb des Getriebegehäuses angeordneten Zahneingriffsbereichen und/oder Lagern sind bekannte Antriebsstränge mit einem Schmierölsystem ausgestattet, dessen Ölreservoir entweder innerhalb des Getriebegehäuses oder als externes Ölreservoir in unmittelbarer Umgebung des Getriebes vorgesehen ist, also in Bezug auf eine gedachte Trennebene zwischen dem Gehäuse und dem Generator auf der Seite des Getriebes. Mit einem externen Reservoir werden insbesondere Getriebe mit mehreren Planetenstufen ohne Stirnradstufe versehen, da bedingt durch den fehlenden Stirnradkasten kein ausreichender Bauraum für die benötigte Ölmenge vorhanden ist. In beiden Fällen ist die konstruktive Auslegung und Unterbringung des Ölreservoirs in der Regel sehr aufwändig und teuer, da die Bereitstellung des benötigten Bauraums Probleme bereitet.

Ausgehend von diesem Stand der Technik ist es eine Aufgabe der vorliegenden Erfindung, eine Windkraftanlage der eingangs genannten Art mit alternativem Aufbau zu schaffen, insbesondere mit optimiertem Schmierölsystem. WO 2011/117005 offenbart die Merkmale des Oberbegriffes des Anspruchs 1. Zur Lösung dieser Aufgabe schafft die vorliegende Erfindung eine Windkraftanlage umfassend einen Antriebsstrang der eingangs genannten Art, der dadurch gekennzeichnet ist, dass das Ölreservoir innerhalb des Generatorgehäuses angeordnet oder an der Außenseite des Generatorgehäuses ausgebildet ist. Mit anderen Worten bilden das Ölreservoir und das Generatorgehäuse erfindungsgemäß eine Einheit. Aufgrund der Tatsache, dass bei Antriebssträngen der Generator in den meisten Fällen weniger Bauraum als das Getriebe einnimmt, werden durch die erfindungsgemäße Integration von Ölreservoir und Generator die Auslegung und Anordnung des Ölreservoirs im Rahmen der Konstruktion stark vereinfacht, was sehr wünschenswert ist. Darüber hinaus lässt sich der erfindungsgemäße Antriebsstrang mit kleinem Bauvolumen, wenigen Bauteilen und geringen Kosten fertigen. Ein weiterer Vorteil besteht darin, dass das Schmieröl bei Netzausfall über die Leerlaufverluste des Generators vorgeheizt werden kann, womit für diesen Zweck häufig vorgesehene separate Heizeinrichtungen entfallen können.

Gemäß einer Variante der vorliegenden Erfindung ist das Ölreservoir zumindest teilweise oberhalb eines statischen Ölstands angeordnet. Ein Vorteil besteht darin, dass während des Betriebs Öl in das Ölreservoir gepumpt wird, was zu einer Ölstandsabsenkung innerhalb des Getriebegehäuses und damit zu einer Wirkungsgradsteigerung führt. Darüber hinaus können Notschmiereigenschaften in einfacher Art und Weise realisiert werden, da das Schmieröl unter dem Einfluss der Schwerkraft aus dem Ölreservoir zu den zu schmierenden Bereichen geleitet werden kann.

Gemäß einer weiteren Variante ist das Ölreservoir zumindest teilweise unterhalb eines statischen Ölstands angeordnet. Diese Anordnung des Ölreservoirs ist dahingehend vorteilhaft, dass das Öl selbständig unter dem Einfluss der Schwerkraft in das Ölreservoir fließen kann.

Gemäß einer bevorzugten Ausgestaltung der vorliegenden Erfindung ist das Ölreservoir konzentrisch zu einer Achse einer Generatorwelle des Generators angeordnet. In diesem Fall erstreckt sich das Ölreservoir im Wesentlichen ringförmig um die Generatorwelle, wodurch der vorhandene Bauraum sehr gut ausgenutzt wird. Ferner ist das Ölreservoir teilweise sowohl oberhalb als auch unterhalb eines statischen Ölstands angeordnet, womit die oben genannten Vorteile einhergehen. Vorteilhaft ist zumindest eine Getriebestufe durch ein Planetengetriebe gebildet. Planetengetriebe zeichnen sich gegenüber Stirnradgetrieben insbesondere durch geringere Lagerreaktionskräfte aus, so dass sich mit diesen leistungsfähigere Antriebsstränge realisieren lassen. Vorteilhaft ist keine Getriebestufe durch ein Stirnradgetriebe gebildet.

Bevorzugt sind das Getriebegehäuse und das Generatorgehäuse miteinander verbunden, insbesondere aneinander angeflanscht. Auf diese Weise wird eine sehr kompakte Bauform des Antriebsstrangs realisiert.

Vorteilhaft weist der Generator einen Generatorkühlkreislauf auf, wobei das Schmierölsystem mit dem Generatorkühlkreislauf wirkverbunden ist. Entsprechend kann das Schmieröl über den Generatorkühlkreislauf gekühlt werden. Somit ist für die Kühlung des Schmieröls kein gesonderter Kühlkreislauf erforderlich.

Gemäß einer Ausgestaltung der vorliegenden Erfindung ist das Schmierölsystem zusätzlich zur Schmierung von außerhalb des Getriebegehäuses angeordneten Antriebsstrangkomponenten ausgelegt, insbesondere zur Schmierung eines Lagerbockes einer Rotorwelle und/oder zur Schmierung von im Generatorgehäuse angeordneten und eine Generatorwelle aufnehmenden Lagern. Insbesondere wird ein einzelnes Schmierölsystem zur Schmierung sämtlicher Komponenten des Antriebsstrangs genutzt.

Vorteilhaft ist eine ölführende Leitung des Schmierölsystems durch eine hohle Generatorwelle gebildet. Dies erleichtert die Ölzuführung zu den die Generatorwelle aufnehmenden Lagern. Bei Nicht-Permanentmagnetgeneratoren wird ein weiterer Vorteil durch die Abkühlung des Generatorrotors über die gekühlte Generatorwelle erzielt.

Weitere Merkmale und Vorteile der vorliegenden Erfindung werden anhand der nachfolgenden Beschreibung einer Windkraftanlage gemäß einer Ausführungsform der vorliegenden Erfindung unter Bezugnahme auf die beiliegende Zeichnung deutlich. Darin ist
- FIG 1: eine schematische Darstellung eines Antriebsstrangs einer Windkraftanlage gemäß einer ersten Ausführungsform der vorliegenden Erfindung;
- FIG 2: eine schematische Darstellung eines Antriebsstrangs einer Windkraftanlage gemäß einer zweiten Ausführungsform der vorliegenden Erfindung; und
- FIG 3: eine schematische Darstellung eines Antriebsstrangs einer Windkraftanlage gemäß einer dritten Ausführungsform der vorliegenden Erfindung.

Gleiche Bezugsziffern bezeichnen nachfolgend gleiche oder gleichartig ausgebildete Bauteile bzw. Komponenten.

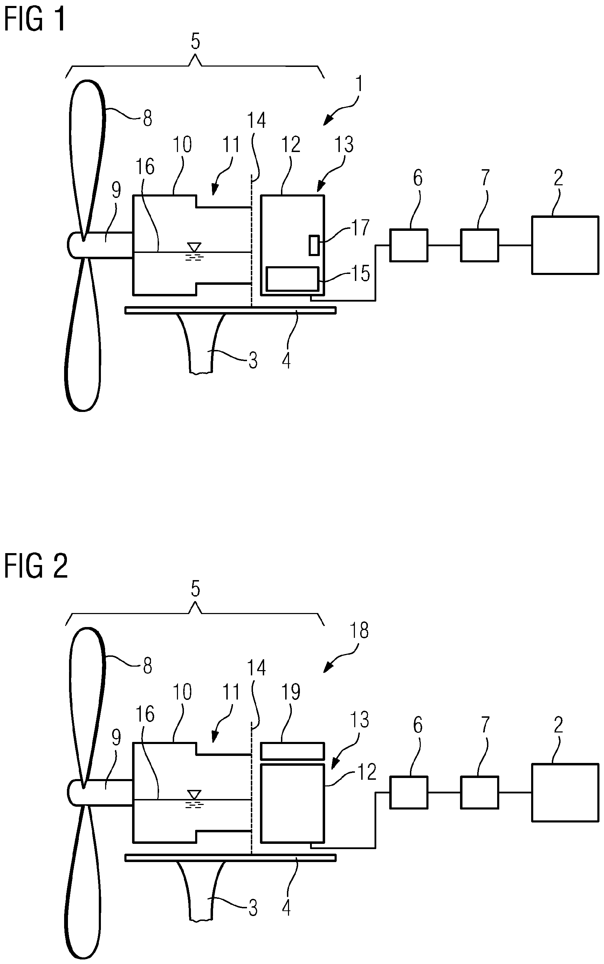

Figur 1 zeigt eine Windkraftanlage 1 gemäß einer Ausführungsform der vorliegenden Erfindung, die an ein Versorgungsnetz 2 angeschlossen ist. Die Windkraftanlage 1 umfasst als Hauptbestandteile einen Turm 3, eine drehbar am oberen Ende des Turms 3 befestigte Trägerplattform 4, einen auf der Trägerplattform 4 angeordneten Antriebsstrang 5 und einen Frequenzumrichter 6, der ebenfalls auf der Trägerplattform 4 positioniert ist und über einen Transformator 7 an das Versorgungsnetz 2 angeschlossen ist. Der Antriebsstrang 5 weist einen vom Wind angetriebenen Rotor 8 auf, der an einer an einem Lagerbock gelagerten Rotorwelle 9 befestigt ist. Die Rotorwelle 9 ist in ein Getriebegehäuse 10 eines Getriebes 11 geführt. Das Getriebe 11 weist mehrere Getriebestufen auf, die jeweils durch ein Planetengetriebe gebildet sind. Die Ausgangswelle des Getriebes 11 ist mit einem nicht näher dargestellten Generatorläufer verbunden, der innerhalb eines Generatorgehäuses 12 eines Generators 13 angeordnet ist. Der Generator ist wiederum an den Frequenzumrichter 6 angeschlossen, der zur Steuerung des Generators 13 und zur Einspeisung der vom Generator 13 erzeugten Energie in das Stromnetz 2 ausgelegt ist.

Das Getriebegehäuse 10 ist vorliegend an das Generatorgehäuse 12 angeflanscht, wobei die Schnittstelle zwischen dem Getriebe 11 und dem Generator 13 vorliegend mit der Bezugsziffer 14 gekennzeichnet ist.

Zur Schmierung von Komponenten des Antriebsstrangs 5, insbesondere von innerhalb des Generatorgehäuses 12 angeordneten Zahneingriffsbereichen und/oder Lagern, von innerhalb des Generatorgehäuses 12 angeordneten und den Generatorläufer aufnehmenden Lagern, des Lagerbockes und gegebenenfalls weiterer Antriebsstrangkomponenten ist der Antriebsstrang 5 mit einem nicht näher dargestellten Schmierölsystem ausgestattet. Das Schmierölsystem kann analog zu bekannten Schmierölsystemen eine Schmierölpumpe, Schmierölleitungen in Form von Rohren, Schläuchen oder Kanälen, Schmierölverteiler, Öleinspritzeinrichtungen oder dergleichen umfassen. Ferner weist das Schmierölsystem ein Ölreservoir 15 auf, das zur Versorgung des Schmierölsystems mit Schmieröl dient. Das Ölreservoir 15 ist vorliegend innerhalb des Generatorgehäuses 12 unterhalb eines statischen Ölstands 16 des Getriebes 11 angeordnet und mit einem Generatorkühlkreislauf 17 wirkverbunden.

Während des Betriebs der Windkraftanlage 1 wird der Windströmung durch den Rotor 8 Energie entnommen, wodurch der Rotor 8 drehend angetrieben wird. Die Drehbewegung des Rotors wird über die Rotorwelle 9 an das Getriebe 11 übertragen, das zur Erhöhung der Drehzahl dient. Die nicht näher dargestellte Ausgangswelle des Getriebes 11 treibt wiederum den Generator 13 an, der die mechanische Energie in elektrische Energie umwandelt, die dann über den Frequenzumrichter 6 und den Transformator 7 in das Stromnetz 2 eingespeist wird.

Dank der Tatsache, dass das Ölreservoir 15 innerhalb des Generatorgehäuses 12 angeordnet ist, ist die Auslegung und Anordnung des Ölreservoirs 15 unproblematisch, da der Generator 13 ausreichend Bauraum zur Verfügung stellt. Ferner kann das Ölreservoir mit nur wenigen Bauteilen realisiert werden. Eine Positionierung des Ölreservoirs 15 unterhalb des statischen Ölstands 16 geht mit dem Vorteil einher, dass das Öl selbständig unter dem Einfluss der Schwerkraft in das Ölreservoir 15 fließen kann.

Figur 2 zeigt eine Windkraftanlage 18 gemäß einer zweiten Ausführungsform der vorliegenden Erfindung, die sich von der in Figur 1 dargestellten Windkraftanlage 1 lediglich in Bezug auf die Positionierung des Ölreservoirs 19, das an der Außenseite des Generatorgehäuses 12 oberhalb des statischen Ölstands 16 befestigt ist. Dies ist dahingehend von Vorteil, dass während des Betriebs Öl in das Ölreservoir 19 gepumpt wird, was zu einer Ölstandsabsenkung innerhalb des Getriebegehäuses 10 und damit zu einer Wirkungsgradsteigerung führt. Alternativ kann das Ölreservoir 19 aber auch unterhalb des statischen Ölstandes an dem Generatorgehäuse befestigt sein. Dies ist dahingehend von Vorteil, dass das Öl, wie es zuvor bereits beschrieben wurde, unter dem Einfluss der Schwerkraft in das Ölreservoir fließen kann. Gemäß einer weiteren Variante kann zumindest die Wandung des Ölreservoirs 15 durch das Getriebegehäuse 12 gebildet sein, wodurch sich Material einsparen lässt.

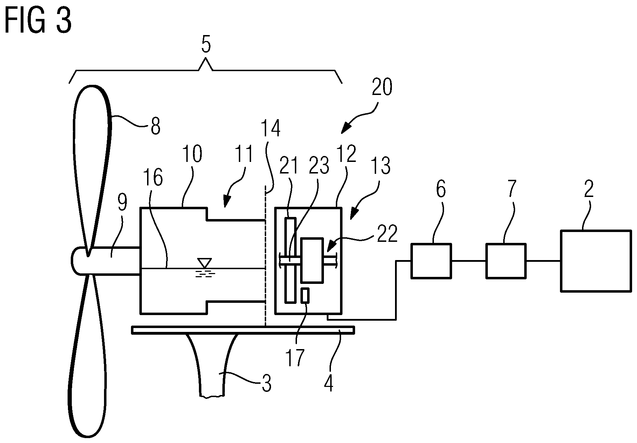

Figur 3 zeigt eine Windkraftanlage 20 gemäß einer dritten Ausführungsform der vorliegenden Erfindung, die sich von der in Figur 1 dargestellten Windkraftanlage 1 ebenfalls nur in Bezug auf die Anordnung des Ölreservoirs 21 unterscheidet. Das Ölreservoir 21 ist vorliegend innerhalb des Generatorgehäuses 12 positioniert. Allerdings ist das Ölreservoir 21 im Gegensatz zum Ölreservoir 15 konzentrisch zu der Achse der den Generatorläufer 22 aufnehmenden Generatorwelle 23 angeordnet. Entsprechend erstreckt sich das Ölreservoir 21 im Wesentlichen ringförmig um die Generatorwelle 23, wodurch der vorhandene Bauraum sehr gut ausgenutzt wird. Ferner ist das Ölreservoir 21 teilweise sowohl oberhalb als auch unterhalb des statischen Ölstands 16 angeordnet, womit die in Bezug auf die ersten beiden Ausführungsformen genannten Vorteile miteinander kombiniert werden. Bei den in den Figuren 1 bis 3 dargestellten Windkraftanlagen 1, 18 und 20 kann eine ölführende Leitung des Schmierölsystems durch eine hohl ausgebildete Generatorwelle ausgebildet sein, was insbesondere die Schmierung von die Generatorwelle aufnehmenden Lagern vereinfacht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Windkraftanlage (1) umfassend einen Antriebsstrang (5) mit einem ein Getriebegehäuse (10) aufweisenden Getriebe (11), einem ein Generatorgehäuse (12) aufweisenden Generator (13) und einem Schmierölsystem, das ein Ölreservoir (15,19,21) aufweist und zumindest zur Schmierung von innerhalb des Getriebegehäuses (10) angeordneten Zahneingriffsbereichen und/oder Lagern ausgelegt ist,
**dadurch gekennzeichnet, dass** das Ölreservoir (15,19,21) innerhalb des Generatorgehäuses (12) angeordnet oder an der Außenseite des Generatorgehäuses (12) ausgebildet ist.

2. Windkraftanlage (1) nach Anspruch 1,
**dadurch gekennzeichnet, dass** das Ölreservoir (19; 21) zumindest teilweise oberhalb eines statischen Ölstands (16) angeordnet ist.

3. Windkraftanlage (1) nach einem der vorhergehenden Ansprüche,
**dadurch gekennzeichnet, dass** das Ölreservoir (15; 21) zumindest teilweise unterhalb eines statischen Ölstands (16) angeordnet ist.

4. Windkraftanlage (1) nach einem der vorhergehenden Ansprüche,
**dadurch gekennzeichnet, dass** das Ölreservoir (21) konzentrisch zu einer Achse einer Generatorwelle (23) des Generators (13) angeordnet ist.

5. Windkraftanlage (1) nach einem der vorhergehenden Ansprüche,
**dadurch gekennzeichnet, dass** zumindest eine Getriebestufe durch ein Planetengetriebe gebildet ist.

6. Windkraftanlage (1) nach einem der vorhergehenden Ansprüche,
**dadurch gekennzeichnet, dass** keine Getriebestufe durch ein Stirnradgetriebe gebildet ist.

7. Windkraftanlage (1) nach einem der vorhergehenden Ansprüche,
**dadurch gekennzeichnet, dass** das Getriebegehäuse (10) und das Generatorgehäuse (12) miteinander verbunden sind, insbesondere aneinander angeflanscht sind.

8. Windkraftanlage (1) nach einem der vorhergehenden Ansprüche,
**dadurch gekennzeichnet, dass** der Generator (13) einen Generatorkühlkreislauf (17) aufweist, und dass das Schmierölsystem mit dem Generatorkühlkreislauf (17) wirkverbunden ist.

9. Windkraftanlage (1) nach einem der vorhergehenden Ansprüche,
**dadurch gekennzeichnet, dass** das Schmierölsystem zusätzlich zur Schmierung von außerhalb des Getriebegehäuses (10) angeordneten Antriebsstrangkomponenten ausgelegt ist, insbesondere zur Schmierung eines Lagerbockes einer Rotorwelle (9) und/oder zur Schmierung von im Generatorgehäuse (12) angeordneten und eine Generatorwelle (23) aufnehmenden Lagern.

10. Windkraftanlage (1) nach Anspruch 9,
**dadurch gekennzeichnet, dass** eine ölführende Leitung des Schmierölsystems durch eine hohle Generatorwelle gebildet ist.

## Claims

1. Wind power plant (1) comprising a drive train (5) with a gearbox (11) having a gearbox housing (10), a generator (13) having a generator housing (12) and a lubricating oil system, which has an oil reservoir (15, 19, 21) and is designed at least to lubricate toothed contact areas and/or bearings arranged within the gearbox housing (10),
**characterised in that** the oil reservoir (15, 19, 21) is arranged within the generator housing (12) or is embodied on the exterior of the generator housing (12).

2. Wind power plant (1) according to claim 1,
**characterised in that** the oil reservoir (19; 21) is arranged at least partially above a static oil level (16).

3. Wind power plant (1) according to one of the preceding claims,
**characterised in that** the oil reservoir (15; 21) is arranged at least partially below a static oil level (16).

4. Wind power plant (1) according to one of the preceding claims,
**characterised in that** the oil reservoir (21) is arranged concentrically with respect to an axle of a generator shaft (23) of the generator (13).

5. Wind power plant (1) according to one of the preceding claims,
**characterised in that** at least one gearbox stage is formed by a planetary gearbox.

6. Wind power plant (1) according to one of the preceding claims,
**characterised in that** no gearbox stage is formed by a helical gearbox.

7. Wind power plant (1) according to one of the preceding claims,
**characterised in that** the gearbox housing (10) and the generator housing (12) are connected to one another, in particular flange-mounted on one another.

8. Wind power plant (1) according to one of the preceding claims,
**characterised in that** the generator (13) comprises a generator cooling circuit (17) and the lubricating oil system is actively connected to the generator cooling circuit (17).

9. Wind power plant (1) according to one of the preceding claims,
**characterised in that** the lubricating oil system is also designed to lubricate drive train components arranged outside of the gearbox housing (10), in particular to lubricate a bearing block of a rotor shaft (9) and/or to lubricate bearings arranged in the generator housing (12) and accommodating a generator shaft (23).

10. Wind power plant (1) according to claim 9,
**characterised in that** an oil-conducting pipe of the lubricating oil system is formed by a hollow generator shaft.

## Revendications

1. Eolienne (1), comprenant une chaîne (5) cinématique ayant une transmission (11), comportant un carter (10) de transmission, une génératrice (13), comportant un carter (12) de génératrice et un système d'huile de lubrification, qui a un réservoir (15, 19, 21) d'huile et qui est conçu au moins pour lubrifier des paliers et/ou des régions d'engrenage de dents disposés à l'intérieur du carter (10) de la transmission,
**caractérisée en ce que** le réservoir (15, 19, 21) d'huile est disposé à l'intérieur du carter (12) de la génératrice ou est constitué sur la face extérieure du carter (12) de la génératrice.

2. Eolienne (1) suivant la revendication 1,
**caractérisée en ce que** le réservoir (19; 21) d'huile est disposé, au moins en partie, au-dessus d'un niveau (16) d'huile statique.

3. Eolienne (1) suivant l'une des revendications précédentes,
**caractérisée en ce que** le réservoir (15; 21) d'huile est disposé, au moins en partie, en dessous d'un niveau (16) d'huile statique.

4. Eolienne (1) suivant l'une des revendications précédentes,
**caractérisée en ce que** le réservoir (21) d'huile est disposé concentriquement à un axe d'un arbre (23) de la génératrice (13).

5. Eolienne (1) suivant l'une des revendications précédentes,
**caractérisée en ce qu'**au moins un étage de la transmission est constitué par un train épicycloïdal.

6. Eolienne (1) suivant l'une des revendications précédentes,
**caractérisée en ce qu'**aucun étage de transmission n'est formé d'un engrenage cylindrique.

7. Eolienne (1) suivant l'une des revendications précédentes,
**caractérisée en ce que** le carter (10) de la transmission et le carter (12) de la génératrice sont assemblés ensemble, en étant notamment bridés l'un à l'autre.

8. Eolienne (1) suivant l'une des revendications précédentes,
**caractérisée en ce que** la génératrice (13) a un circuit (17) de refroidissement et **en ce que** le système d'huile de lubrification est en liaison d'action avec le circuit (17) de refroidissement de la génératrice.

9. Eolienne (1) suivant l'une des revendications précédentes,
**caractérisée en ce que** le système d'huile de lubrification est conçu pour lubrifier supplémentairement des éléments de la chaîne cinématique disposés à l'extérieur du carter (10) de la transmission, notamment pour lubrifier un palier support d'un arbre (9) de rotor et/ou pour lubrifier des paliers disposés dans le carter (12) de la génératrice et recevant un arbre (23) de la génératrice.

10. Eolienne (1) suivant la revendication 9,
**caractérisée en ce qu'**un conduit d'huile du système d'huile de lubrification est formé par un arbre creux de la génératrice.
